# EUROPEAN PATENT APPLICATION

(11) **EP 2 611 164 A2**
(43) Date of publication of application: **03.07.2013**
(21) Application number: 12195102.4
(22) Date of filing: 30.11.2012
(51) Int. Cl.: H04N 13/00

(54) **Display apparatus and method for providing three dimensional (3D) image**

(30) Priority: 28.12.2011 KR 20110145127
(71) Applicant: Samsung Electronics Co., Ltd., Gyeonggi-do 443-742 (KR)
(72) Inventor: Jeon, Hyoung-woo, Gyeonggi-do (KR)
(74) Representative: Clark, David James

(57) **Abstract**

A display apparatus and a method for providing a three dimensional (3D) image are provided. The display apparatus includes a display unit, a receiving unit which receives three dimensional (3D) image data having frames each having therein left-eye and right-eye images, a resolution converting unit which converts resolutions of the left-eye and right-eye images respectively, and a control unit being configured to extract additional data containded in the 3D image data, generate additional left-eye and right-eye images by processing the extracted additional data, and combine the converted left-eye and right-eye images with the additional left-eye and right-eye images, respectively. As a result, image related to additional data such as subtitle or on screen display (OSD) can be displayed on a screen normally, along with the full 3D image.

## Description

### BACKGROUND

### 1. Field

Apparatuses and methods consistent with the exemplary embodiments relate to displaying three-dimensional (3D) images, and more particularly, to a display apparatus and a method for providing a 3D image containing additional data.

### 2. Description of the Related Art

Generally, a three dimensional (3D) image data such as side-by-side or top-and-bottom image is constructed so that one frame contains therein left-eye and right-eye images interconnected with each other horizontally or vertically.

Accordingly, a display apparatus, when receiving the 3D image data from an external device, converts the received image into a full 3D image to display the same. That is, the display apparatus enlarges the left-eye and right-eye images contained in the 3D image data to two times the original sizes to perform displaying. As explained above, in converting the 3D image data to display the same, the additional data such as subtitle or on-screen display (OSD) data contained in the left-eye and right-eye images are also enlarged. However, when the additional data contained in the left-eye and right eye images are enlarged according to the enlargement of the images, the additional data is not displayed normally.

To be specific, if the left-eye and right-eye images contain subtitles, in order to have the subtitles of the left-eye and right-eye images displayed successively, the subtitle on the left-eye image is arranged on the right-bottom side of the image, while the subtitle of the right-eye image is arranged on the left-bottom side of the image. In the process of enlarging the left-eye and right-eye images to two times the original sizes thereof, the subtitle of the left-eye image is displayed on the right-bottom side on the screen, while the subtitle of the right-eye image is displayed on the left-bottom side of the screen. That is, the subtitles are jumbled in incorrect orders when these are displayed.

### SUMMARY

Exemplary embodiments overcome the above disadvantages and other disadvantages not described above. Also, the exemplary embodiments are not required to overcome the disadvantages described above, and an exemplary embodiment may not overcome any of the problems described above.

Accordingly, an object of the exemplary embodiments is to provide images related to additional data such as subtitles or on screen display (OSD) regarding a three dimensional (3D) image normally.

According to an exemplary embodiment, a display apparatus includes a display unit, a receiving unit which receives three dimensional (3D) image data having frames each having therein left-eye and right-eye images, a resolution converting unit which converts resolutions of the left-eye and right-eye images respectively, and a control unit being configured to extract additional data containded in the 3D image data, generate additional left-eye and right-eye images by processing the extracted additional data, and combine the converted left-eye and right-eye images with the additional left-eye and right-eye images, respectively.

These various units may be implemented as particular hardware or as software running on a general purpose computer processor such as a CPU or the like.

The additional data may be a subtitle or on screen display (OSD) data.

The 3D image data may be side-by-side image data having frames each having the left-eye and right-eye images arranged side by side, or top-to-bottom image data having frames each having the left-eye and right-eye images arranged in a vertical manner.

The resolution converting unit may separate additional data in a predetermined color pattern from an area corresponding to a preset area of the 3D image data.

The resolution converting unit may separate additional data regarding an area in a predetermined color pattern from the 3D image data.

The resolution converting unit may separate additional data having a still image from the 3D image data.

The resolution converting unit may include a detecting unit which detects empty areas of the left-eye and right-eye images of the 3D image data, generated in accordance with the separation of the additional data, and an image recovery unit which acquires image data of areas corresponding to the empty areas of the left-eye and right-eye images detected at the detecting unit, from areas on adjacent sides of the left-eye and right-eye images, respectively, and recovers the image data of the areas corresponding to the empty areas.

In another exemplary embodiment, a method of a display apparatus for providing a three dimensional (3D) image may include receiving, from an external device, 3D image data having frames each having left-eye and right-eye images, converting the resolution of the left-eye and right-eye images respectively, configuring to extract additional data contained in the 3D image data, generating additional left-eye and right-eye image by processing the extracted additional data, and combining the converted left-eye and right-eye images with the additional left-eye and right-eye images, respectively.

The additional data may be a subtitle or on screen display (OSD) data.

The 3D image data may be side-by-side image data having frames each having the left-eye and right-eye images arranged side by side, or top-to-bottom (vertical) image data having frames each having the left-eye and right-eye images arranged in a vertical manner.

The converting the resolution of the left eye and right eye images may include separating additional data in a predetermined color pattern from an area corresponding to a preset area of the 3D image data.

The converting the resolution of the left eye and right eye images may include separating additional data in an area in a predetermined color pattern from the 3D image data.

The converting the resolution of the left eye and right eye images may include separating additional data having a still image from the 3D image data.

The method may additionally include recovering areas regarding empty areas generated in accordance with the separation of the additional data, from images on adjacent sides of the left-eye and right-eye images from which the additional data is separated.

The recovering may include detecting empty areas generated in accordance with the separation of the additional data from the left-eye and right-eye images, acquiring image data of areas corresponding to the empty areas of the left-eye and right-eye images, from areas on adjacent sides of the left-eye and right-eye images, respectively, and recovering the image data of the areas corresponding to the empty areas of the left-eye and right-eye images by using the acquired images.

In various exemplary embodiments, the display apparatus and method for providing 3D image may separate additional data from the 3D image data received from the external device, before converting the received image into a full 3D image. Then as the converted 3D image is combined with the additional data, the images related to the additional data such as subtitle or OSD can be normally displayed on the screen along with the full 3D image.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will be more apparent by describing certain exemplary embodiments with reference to the accompanying drawings, in which:
FIG. 1 illustrates a related art display apparatus displaying a three dimensional (3D) image;
FIG. 2 is a block diagram of a display apparatus according to an exemplary embodiment;
FIG. 3 illustrates a display apparatus displaying 3D image along with additional data according to an exemplary embodiment;
FIG. 4 illustrates a display apparatus displaying additional data along with 3D image, according to another exemplary embodiment;
FIG. 5 is a flowchart illustrating a method of a display apparatus for providing a 3D image including additional data, according to an exemplary embodiment; and
FIG. 6 is a flowchart illustrating an image recovery process at a display apparatus with respect to empty areas of a left-eye image and a right-eye image of a 3D image data, according to an exemplary embodiment.

### DETAILED DESCRIPTION OF THE EXEMPLARY EMBODIMENTS

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the exemplary embodiments. Accordingly, it is apparent that the exemplary embodiments can be carried out without those specifically defined matters. Also, well-known functions or constructions are not described in detail since they would obscure the exemplary embodiments with unnecessary detail.

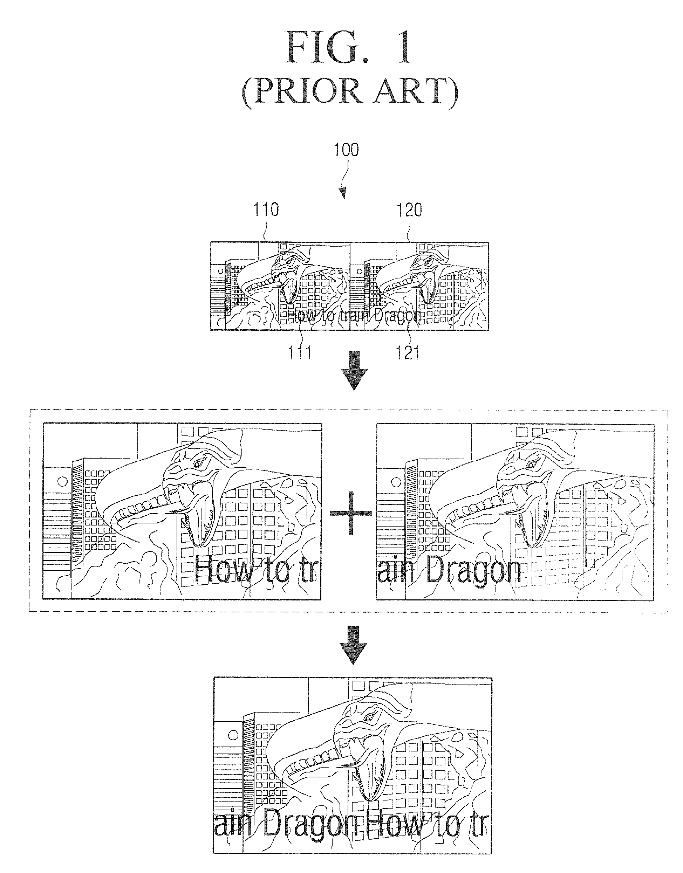

FIG. 1 illustrates a related art display apparatus displaying a three dimensional (3D) image.

Referring to FIG. 1, on receiving 3D image data related to a side-by-side or top-and-bottom image from an external device, a display apparatus converts the received 3D image data into a full 3D image. The 3D image data related to a side-by-side and top-and-bottom image has a left-eye image and a right-eye image provided in one frame. Since the left-eye and right-eye images are in reduced form than the images actually displayed on a screen, the display apparatus enlarges the left-eye and right-eye images to two times the original sizes before displaying the images, to ensure that the left-eye and right-eye images are outputted as a full 3D image.

Meanwhile, the left-eye and right-eye images may include additional data such as subtitles. The additional data is also enlarged when the left-eye and right-eye images are enlarged at the display apparatus. However, as the additional data are enlarged along with the left-eye and right-eye images, the additional data are frequently displayed in a jumbled manner.

As illustrated, the left-eye image 110 of the 3D image data 100 may include additional data 111 which is "How to tr", while the right-eye image 120 may include the additional data 121 which is "ain Dragon". Therefore, when the 3D image data 100 regarding the left-eye and right-eye images 110, 120 each containing the said additional data is received from the external device, the display apparatus enlarges the left-eye and right-eye images 110, 120 of the 3D image data to two times the original sizes and displays the resultant images.

As the left-eye and right-eye images 110, 120 are enlarged to two times the original sizes, the additional data 111, 121 contained in the left-eye and right-eye images 110, 120 are also enlarged to two times the original sizes. As a result, the additional data are displayed on the screen in an abnormal order. In normal processing, "How to tr" contained in the left-eye image 110 and "ain Dragon" contained in the right-eye image 120 in combined form is arranged on the center bottom side of the screen. However, as the additional data 111, 121 contained in the left-eye and right-eye images 110, 120 are enlarged to two times the original sizes, the additional data 111 "How to tr" is arranged on the left bottom side of the screen, and the additional data 121 "ain Dragon" is arranged on the right bottom side of the screen. As a result, the additional data are displayed abnormally.

The problem related to abnormal displaying of the additional data, which occurs in the related art display apparatus when displaying additional data of the 3D image data related to externally-received side-by-side or top-and-bottom image, has been explained above.

Hereinbelow, an operation of the display apparatus according to an exemplary embodiment will be explained, in which the additional data of the 3D image data related to externally-received side-by-side or top-and-bottom image is displayed normally.

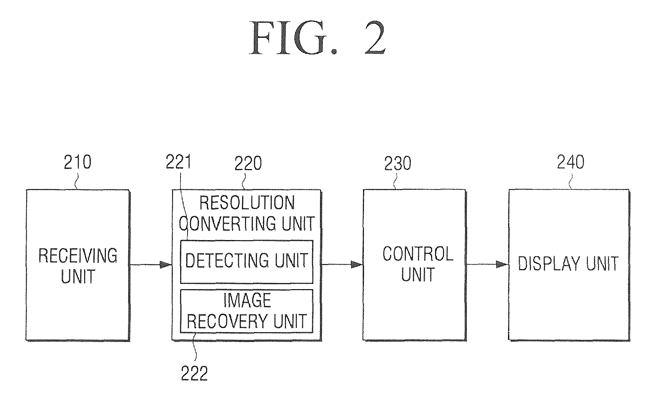

FIG. 2 is a block diagram of a display apparatus according to an exemplary embodiment.

Referring to FIG. 2, the display apparatus according to an exemplary embodiment may include a receiving unit 210, a resolution converting unit 220, a control unit 230 and a display unit 240.

The receiving unit 210 may receive 3D image data in which left-eye and right-eye images are provided in one frame. The 3D image data may preferably be side-by-side image data, or top-and-bottom image data. The side-by-side or top-and-bottom image data refers to a way of transmitting 3D image data. To be specific, the side-by-side image data has the data frames each having left-eye and right-eye images arranged side by side. The top-and-bottom image data has the data frames each having left-eye and right-eye images arranged top and bottom, that is, vertically.

Accordingly, the external device may transfer to the display apparatus the 3D image data carrying left-eye and right-eye images arranged in a frame either side by side or top and bottom according to the side-by-side or top-and-bottom image transmission. If the 3D image data is received at the receiving unit 210, the resolution converting unit 220 may determine if the received 3D image data includes additional data. Upon determining that the received 3D image data includes additional data, the resolution converting unit 220 may separate the additional data from the 3D image data. After that, the resolution converting unit 220 may convert the resolution of the 3D image data from which the additional data is separated. The additional data may preferably be subtitle or On Screen Display (OSD) data.

To be specific, the external device may transfer to the display apparatus the 3D image data containing left-eye and right-eye images along with the additional data. Accordingly, the resolution converting unit 220 may check to determine if the 3D image data received from the external device contains additional data. If the result of checking indicates that the left-eye and right-eye images of the 3D image data includes the additional data, the resolution converting unit 220 may separate the additional data from the left-eye and right-eye images.

According to an exemplary embodiment, the resolution converting unit 220 may separate the additional data in a predetermined color pattern from an area corresponding to a preset area of the 3D image data received from the external device. In an exemplary embodiment, the left-eye and right-eye images of the 3D image data may include additional data related to subtitle. The subtitle may be two-dimensional (2D) image data in a white background, and may be displayed on a bottom side or right side of the screen displaying the video. Accordingly, the resolution converting unit 220 may detect the subtitle in a white background at an area corresponding to the bottom or right side of the screen, from the left-eye and right-eye images of the received 3D image data. If the subtitle contained in the left-eye and right-eye images is detected, the resolution converting unit 220 may separate the detected subtitle from the left-eye and right-eye images, respectively.

According to another exemplary embodiment, the resolution converting unit 220 may separate the additional data related to an area of a predetermined color pattern from the received 3D image data. In an exemplary embodiment, the left-eye and right-eye images of the 3D image data may include additional data related to a subtitle. By way of example, the screen aspect ratio to play back the video may be 16:9 or 4:3, and the area other than the area to play back the video, that is, the top and bottom side areas may be in a black color pattern. The subtitle may be displayed on the black color pattern area of the bottom area of the 3D image. Accordingly, the resolution converting unit 220 may detect an area of black color pattern from the left-eye and right-eye images of the received 3D image data. Upon detecting the area of black color pattern of the left-eye and right-eye images, the resolution converting unit 220 may separate the detected area from the left-eye and right-eye images, respectively.

According to another exemplary embodiment, the resolution converting unit 220 may separate additional data including a still image from the received 3D image data. In an exemplary embodiment, the left-eye and right-eye images of the 3D image data may include additional data related to subtitle, and the subtitle may be 2D image data related to the still image. Accordingly, the resolution converting unit 220 may detect 2D image data related to the still image from the left-eye and right-eye images of the received 3D image data. Upon detecting the 2D image data related to the still image from the left-eye and right-eye images, the resolution converting unit 220 may separate the detected 2D image data related to the still image from the left-eye and right-eye images, respectively.

As explained above, the resolution converting unit 220 may separate the additional data from the left-eye and right-eye images of the received 3D image, and then convert the resolution of the left-eye and right-eye images separated from the additional data. That is, since there is an empty area generated in accordance with the separation of the additional data from the left-eye and right-eye images, the resolution converting unit 220 recovers the image related to the empty area, and then enlarges the recovered left-eye and right-eye images to two times the original sizes. As a result, the images are converted to a full 3D image. The operation at the resolution converting unit 220 may be implemented through a detecting unit 221 and an image recovery unit 222.

The detecting unit 221 may detect an empty area which is generated in accordance with the separation of the additional data from the left-eye and right-eye images of the 3D image. In an exemplary embodiment, the resolution converting unit 220 may detect the additional data related to a subtitle, which is set to be displayed in white color pattern on the bottom area of the screen, of the left-eye and right-eye images, and separate the detected additional data from the left-eye and right-eye images. Upon detecting the additional data from the left-eye and right-eye images, the detecting unit 221 may detect the empty areas of the left-eye and right-eye images generated in accordance with the additional data detection.

If the empty areas of the left-eye and right-eye images are detected at the detecting unit 221, the image recovery unit 222 may acquire image data of the area corresponding to the empty areas of the left-eye and right-eye images, from the adjacent images in a predetermined direction, and recover the data corresponding to the empty areas. To be specific, to recover the data corresponding to the empty area of the left-eye image, the image recovery unit 222 may use the right-eye image contained in the 3D image data, together with the left-eye image. By way of example, if the detecting unit 221 detects the empty area on the right bottom side of the left-eye image, the image recovery unit 222 may track the left-eye image and recover an area corresponding to the right bottom area of the left-eye image based on the left bottom area of the right-eye image.

Meanwhile, the image recovery unit 222 may use the left-eye image contained in the 3D image data, together with the right-eye image, to recover the data corresponding to the empty area of the right-eye image. For example, if the detecting unit 221 detects an empty area of the right-eye image on the left bottom side, the image recovery unit 222 may track the left-eye image and recover an image corresponding to the right bottom area of the left-eye image based on the left bottom area of the right-eye image.

However, one will note that the exemplary embodiment is not limited to the example explained above and other examples are possible. Accordingly, the image recovery unit 222 may recover the data corresponding to the empty area of the left-eye image and the right-eye image as detected at the detecting unit 221, using the left-eye and right-eye images of the 3D image data which may be inputted before or after the 3D image data.

Accordingly, if the image recovery unit 222 completes recovering the empty area of the left-eye and right-eye images based on the replacement image, the resolution converting unit 220 may generate a full 3D image by converting the resolution of the left-eye and right-eye images. If the resolution converting unit 220 generates the full 3D image by changing the resolution of the left-eye and right-eye images, the control unit 230 may control so that the display unit 240 displays the 3D image in combination with the additional data respectively separated from the left-eye and right-eye images.

To be specific, the control unit 230 being configured to extract additional data contained in the 3D image data, generate additional left-eye and right-eye images by processing the extracted additional data. Subsequently, the control unit 230 controls to combine the converted left-eye and right-eye images with the additional left-eye and right-eye images, respectively, and display the resultant images through the display unit 240.As explained above, the display apparatus according to an exemplary embodiment may display a full 3D image based on the 3D image data received from the external device after separating the additional data from the left-eye and right-eye images, respectively, and combining the separated additional data with the full 3D image. As a result, the problem of abnormal display of the additional data of the left-eye and right-eye images of the 3D image data on the screen can be resolved.

Hereinbelow, an operation of the display apparatus to display additional data along with the full 3D image normally according to an exemplary embodiment will be explained.

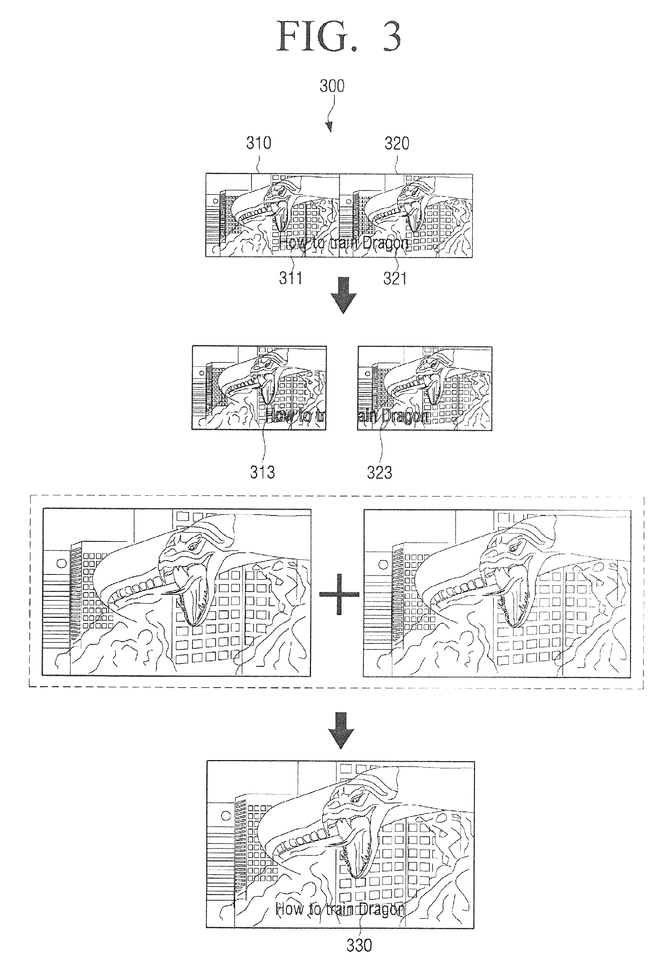

FIG. 3 illustrates the display apparatus displaying the full 3D image along with the additional data, according to an exemplary embodiment.

Referring to FIG. 3, the display apparatus receives the 3D image data 300 carrying left-eye and right-eye images 310, 320 arranged in a frame either side by side or top and bottom according to the side-by-side or top-and-bottom image transmission. In an exemplary embodiment, the display apparatus may receive the 3D image data 300 in side-by-side data transmission, in which the data includes left-eye and right-eye images 310, 320 arranged side by side in one frame.

If receiving the 3D image data 300 having left-eye and right-eye images 310, 320 arranged side by side in one frame, the display apparatus may check to determine if the left-eye and right-eye images 310, 320 include subtitles 311, 321, and separate the subtitles 311, 321 from the left-eye and right-eye images 310, 320, respectively. In an exemplary embodiment, the subtitle 311 of the left-eye image 310 may be formed on the right bottom side of the left-eye image 310, in white background. The subtitle 321 of the right-eye image 320 may be formed on the left bottom side of the right-eye image 320, in white background. According to such conditions, the display apparatus may separate the corresponding subtitles 311, 321 from the left-eye and right-eye images 310, 320.

After that, the display apparatus may detect empty areas 313, 323 which are generated in accordance with the separation of the subtitles 311, 321 from the left-eye and right-eye images 310, 320. If detecting the empty areas 313, 323 corresponding to the left-eye and right-eye images 310, 320, the display apparatus may track the area corresponding to the empty area 313 of the left-eye image 310 based on the right-eye image 320. The display apparatus may then track the areas corresponding to the empty area 323 of the right-eye image 320 based on the left-eye image 310. After that, the display apparatus may recover the data corresponding to the empty areas 313, 323 using the images corresponding to the areas tracked according to the empty areas 313, 323 of the left-eye and right-eye images 310, 320. After that, the display apparatus may enlarge the resolution of the left-eye and right-eye images 310, 320 to two times their original sizes, to thereby generate a full 3D image. If the full 3D image is generated from the left-eye and right-eye images 310, 320, the display apparatus may combine the subtitles 311, 321 separated from the left-eye and right-eye images 310, 320 with the full 3D image. As a result, the display apparatus may display on the screen the full 3D image comprising the left-eye and right-eye images 310, 320, along with the combined subtitle 330 of the subtitles 311, 321 contained in the left-eye and right-eye images 310,320.

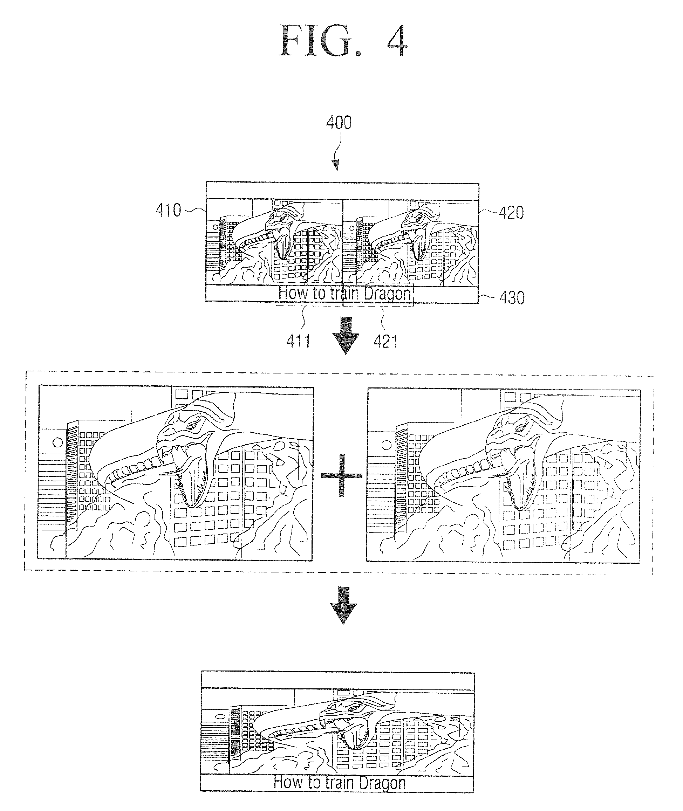

FIG. 4 illustrates another example of a display apparatus displaying full 3D image along with additional data, according to an exemplary embodiment.

Referring to FIG. 4, the display apparatus may receive from an external device 3D image data 400 having left-eye and right-eye images 410, 420 arranged side by side in one frame. Upon receiving the 3D image data 400, the display apparatus may check to determine if the left-eye and right-eye images 410, 420 respectively include subtitles 411, 421, and separate the subtitles 411, 421 from the left-eye and right-eye images 410, 420, respectively. In an exemplary embodiment, the subtitles 411, 421 contained in the left-eye and right-eye images 410, 420 may be non-playback areas other than areas on which the full 3D image is played back. The non-playback areas may be in black color pattern. According to the exemplary embodiment, the display apparatus may separate the areas in black color pattern from the left-eye and right-eye images 410, 420.

After that, the display apparatus may generate a full 3D image by enlarging the resolution of the left-eye and right-eye images 410, 420 excluding the areas in black color pattern to two times the original sizes. When the full 3D image is generated regarding the left-eye and right-eye images 410, 420, the display apparatus may combine the black color pattern areas 411, 421 separated from the left-eye and right-eye images 410, 420 to the full 3D image and display the resultant image. As a result, the subtitle included in the black color pattern areas 411, 412 of the left-eye and right-eye images 410, 420 may be displayed on the screen normally.

The operation of the display apparatus for displaying full 3D image along with additional data according to various exemplary embodiments have been explained above. Hereinbelow, a method of a display apparatus for providing a full 3D image containing additional data according to an exemplary embodiment will be explained.

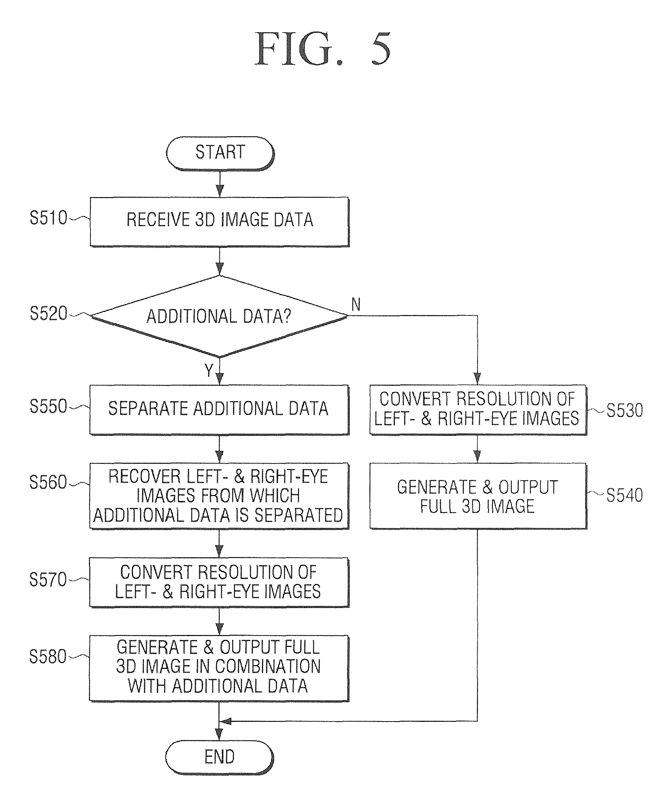

FIG. 5 is a flowchart provided to explain a method of a display apparatus for providing a full 3D image containing additional data, according to an exemplary embodiment.

Referring to FIG. 5, at operation S510, the display apparatus may receive from an external device the 3D image data having left-eye and right-eye images arranged in one frame. In an exemplary embodiment, the 3D image data may preferably be side-by-side image data or top-and-bottom image data. The side-by-side or top-and-bottom image data refers to a way of transmitting 3D image data. To be specific, the side-by-side image data has a data frame each having left-eye and right-eye images arranged side by side. The top-and-bottom image data has data frames each having left-eye and right-eye images arranged top and bottom.

At operation S520, if the 3D image data is received, the display apparatus may check to determine if the left-eye and right-eye images of the received 3D image data contain additional data. At operation S530, if determining as a result of the check in operation S520 that the left-eye and right-eye images do not include the additional data, the display apparatus may enlarge the resolution of the left-eye and right-eye images of the 3D image data to two times the original sizes. At operation S540, the display apparatus may generate a full 3D image based on the left-eye and right-eye images increased to two times the original sizes and display the resultant image on the screen.

At operation S550, if determining as a result of the check in operation S520 that the left-eye and right-eye images of the 3D image data respectively include additional data, the display apparatus may separate the additional data from the left-eye and right-eye images. In an exemplary embodiment, the display apparatus may separate the additional data in predetermined color patterns from the area corresponding to a preset area, from the 3D image data received from the external device. By way of example, the left-eye and right-eye images of the 3D image data may include additional data related to subtitles or on screen display data. Referring to FIG. 3, the subtitles may be arranged on the right bottom side of the left-eye image and left bottom side of the right-eye image, in white background. Accordingly, the display apparatus may detect and separate the subtitles in white background from the right bottom side of the left-eye image and left bottom side of the right-eye image.

In another exemplary embodiment, the display apparatus may separate additional data regarding an area in a predetermined color pattern from the received 3D image data. Referring to FIG. 4, the subtitles contained in the left-eye and right-eye images may be formed on non-playback areas other than the area on which the full 3D image is played back. The non-playback area may be in black color pattern. According to the exemplary embodiment, the display apparatus may separate the areas in black color pattern from the left-eye and right-eye images.

In yet another exemplary embodiment, the display apparatus may separate additional data carrying a still image from the received 3D image data. By way of example, the left-eye and right-eye images of the 3D image data may include additional data related to subtitles, and the subtitles may be 2D image data related to a still image. Accordingly, the display apparatus may detect the additional data related to the still image from the left-eye and right-eye images of the 3D image data, and separate the detected additional data from the left-eye and right-eye images.

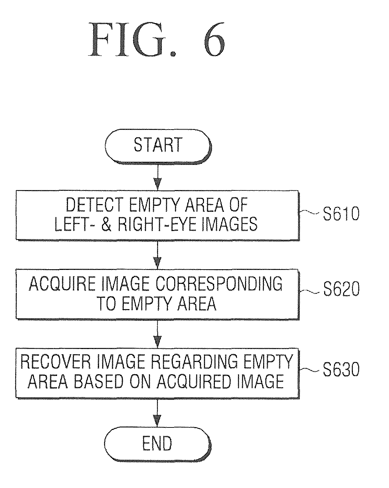

At operation S560, if the additional data is separated from the left-eye and right-eye images of the 3D image data, the display apparatus may perform image recovery with respect to empty areas which are generated in accordance with the separation of the additional data from the left-eye and right-eye images. FIG. 6 illustrates the image recovery of the display apparatus performed with respect to the empty areas of the left-eye and right-eye images of the 3D image data.

FIG. 6 is a flowchart illustrating an image recovery process at a display apparatus with respect to empty areas of a left-eye image and a right-eye image of a 3D image data, according to an exemplary embodiment.

Referring to FIG. 6, at operation S610, if the additional data is separated from the left-eye and right-eye images, the display apparatus may detect the empty areas generated in accordance with the separation of the additional data from the left-eye and right-eye images. If detecting empty areas, at operation S620, the display apparatus may acquire image data of areas corresponding to the empty areas of the left-eye and right-eye images from the areas on adjacent sides to the left-eye and right-eye images, respectively. At operation S630, the display apparatus may recover the empty areas of the left-eye and right-eye images by using the acquired images. To be specific, the display apparatus may use the right-eye image included in the 3D image data along with the left-eye image to recover the empty area of the left-eye image. By way of example, if detecting that the empty area of the left-eye image is on the right bottom side, the display apparatus may track the right-eye image and recover the right bottom area of the left-eye image into an image corresponding to the left bottom area of the right-eye image.

Meanwhile, in order to recover the empty area of the right-eye image, the display apparatus may use the left-eye image contained in the 3D image data along with the right-eye image. By way of example, if detecting that the empty area of the right-eye image is on the left bottom side, the display apparatus may track the left-eye image and recover the left bottom area of the right-eye image into an area corresponding to the right bottom area of the left-eye image.

However, an exemplary embodiment is not limited to the examples provided above. Accordingly, the display apparatus may recover the empty areas of the left-eye and right-eye images detected at operation S610, using the left-eye and right-eye images of the 3D image data inputted before or after the input of the 3D image data.

At operation S570, if the empty areas of the left-eye and right-eye images are recovered, the display apparatus may convert the resolution of the left-eye and right-eye images. To be specific, the display apparatus may convert the resolution of the left-eye and right-eye images with the recovered empty areas to two times the original sizes, to thus generate a full 3D image. At operation S580, the display apparatus may combine the full 3D image, which is generated by converting the resolution of the images to two times the original sizes, with the subtitles separated from the left-eye and right-eye images at operation S550, and display the resultant image on the screen.

To be specific, the control unit 230 being configured to extract additional data contained in the 3D image data, generate additional left-eye and right-eye images by processing the extracted additional data. Subsequently, the control unit 230 controls to combine the converted left-eye and right-eye images with the additional left-eye and right-eye images, respectively, and display the resultant images through the display unit 240.As explained above, an exemplary embodiment may resolve the problem in which the additional data of the left-eye and right-eye images of the 3D image data is displayed on the screen abnormally.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display unit;
a receiving unit which receives three dimensional (3D) image data having frames, one of the frames comprising a left-eye image and a right-eye image;
a resolution converting unit which converts resolutions of the left-eye image and the right-eye image respectively; and
a control unit being configured to extract additional data containded in the 3D image data, generate additional left-eye and right-eye images by processing the extracted additional data, and combine the converted left-eye and right-eye images with the additional left-eye and right-eye images, respectively.

2. The display apparatus of claim 1, wherein the additional data is a subtitle or on screen display (OSD) data.

3. The display apparatus of claim 2, wherein the 3D image data is side-by-side image data having frames each having the left-eye image and the right-eye image arranged side by side, or top-to-bottom image data having frames each having the left-eye image and right-eye image arranged vertically.

4. The display apparatus of claim 1, wherein the resolution converting unit separates additional data in a predetermined color pattern from an area corresponding to a preset area of the 3D image data.

5. The display apparatus of claim 1, wherein the resolution converting unit separates additional data in an area in a predetermined color pattern from the 3D image data.

6. The display apparatus of claim 1, wherein the resolution converting unit separates additional data having a still image from the 3D image data.

7. The display apparatus of claim 4 to 6, wherein the resolution converting unit comprises:
a detecting unit which detects empty areas of the left-eye image and the right-eye image of the 3D image data, generated in accordance with the separation of the additional data; and
an image recovery unit which acquires image data of areas corresponding to the empty areas of the left-eye image and the right-eye image detected at the detecting unit, from areas on adjacent sides to the left-eye and right-eye images, respectively, and recovers the empty areas.

8. A method of a display apparatus for providing a three dimensional (3D) image, the method comprising:
receiving from an external device 3D image data having frames, one of the frames comprising a left-eye image and a right-eye image;
converting a resolution of the left-eye image and a resolution of the right-eye image respectively;
configuring to extract additional data contained in the 3D image data;
generating additional left-eye and right-eye image by processing the extracted additional data; and
combining the converted left-eye and right-eye images with the additional left-eye and right-eye images, respectively.

9. The method of claim 8, wherein the additional data is a subtitle or on screen display (OSD) data.

10. The method of claim 9, wherein the 3D image data is side-by-side image data having the frames, the one of the frames comprising the left-eye image and the right-eye image arranged side by side, or top-to-bottom image data having the frames, the one of the frames comprising the left-eye image and the right-eye image arranged vertically.

11. The method of claim 8, wherein the converting the resolution comprises separating additional data in a predetermined color pattern from an area corresponding to a preset area of the 3D image data.

12. The method of claim 8, wherein the converting the resolution comprises separating additional data regarding an area in a predetermined color pattern from the 3D image data.

13. The method of claim 8, wherein the converting the resolution comprises separating additional data having a still image from the 3D image data.

14. The method of claim 11 to 13, further comprising:
recovering areas regarding empty areas generated in accordance with the separation of the additional data, from images on adjacent sides to the left-eye image and the right-eye image from which the additional data is separated.

15. The method of claim 14, wherein the recovering comprises:
detecting empty areas generated in accordance with the separation of the additional data from the left-eye image and the right-eye image;
acquiring image data of areas corresponding to the empty areas of the left-eye image and the right-eye image, from areas on adjacent sides to the left-eye image and the right-eye image, respectively; and
recovering the empty areas of the left-eye image and the right-eye image by using the acquired images.
